# EUROPÄISCHE PATENTSCHRIFT

(11) **EP 3 871 906 B1**
(45) Veröffentlichungstag und Bekanntmachung des Hinweises auf die Patenterteilung: **11.01.2023**
(21) Anmeldenummer: 20210568.0
(22) Anmeldetag: 30.11.2020
(51) Int. Cl.: B60C 11/24

(54) **VERFAHREN ZUR ERFASSUNG EINER ÄNDERUNG EINES PROFILS EINES REIFENS**
METHOD OF MONITORING A CHANGE OF TREAD DEPTH OF A TIRE
MÉTHODE DE SURVEILLANCE DE CHANGEMENT D'UNE ÉPAISSEUR DE PROFIL D'UN PNEUMATIQUE

(30) Priorität: 27.02.2020 DE 102020202494
(43) Veröffentlichungstag der Anmeldung: 01.09.2021
(73) Patentinhaber: Continental Reifen Deutschland GmbH, 30165 Hannover (DE)
(72) Erfinder: Sahlmüller, Baldo, 30419 Hannover (DE); Gläser, Frank, 30419 Hannover (DE)
(74) Vertreter: Continental Corporation

(56) Entgegenhaltungen:
- WO-A1-2018/172317
- DE-A1-102012 108 348
- DE-A1-102015 216 210

## Beschreibung

Die Erfindung betrifft ein Verfahren zur Erfassung einer Änderung eines Profils eines Reifens und ein System zur Bestimmung einer Profiltiefe eines Reifens. Das System ist zur Durchführung eines erfindungsgemäßen Verfahrens vorgesehen.

Die Erfindung geht aus von einem Verfahren zur Erfassung einer Änderung eines Profils eines Reifens aufweisend die folgenden Schritte:
- Bereitstellen eines Reifens eines Fahrzeugs, wobei der Reifen eine Reifeninnenfläche aufweist;
- Bereitstellen eine Beschleunigungsmessvorrichtung, wobei die Beschleunigungsmessvorrichtung zur Erfassung einer Beschleunigung vorgesehen ist;
- Anordnen der Beschleunigungsmessvorrichtung an einem Anbringungsbereich der Reifeninnenfläche des Reifens;
- Erfassen von Radialbeschleunigungen der Beschleunigungsmessvorrichtung mittels der Beschleunigungsmessvorrichtung zu voneinander verschiedenen Zeitpunkten;
- Erfassen einer Geschwindigkeit des Fahrzeugs;
- Bereitstellen einer Verarbeitungseinheit;
- Übermitteln der gemessenen Radialbeschleunigungen und der Geschwindigkeit des Fahrzeugs an die Verarbeitungseinheit;
- Bereitstellen einer Speichervorrichtung;
- Speichern und Weiterverarbeiten der Radialbeschleunigungen und der dazu gehörenden Geschwindigkeiten in der Speichervorrichtung.

Bei der Geschwindigkeit handelt es sich um die Geschwindigkeit des Fahrzeugs zu dem Zeitpunkt, an dem auch die Radialbeschleunigung erfasst wird.

Aus dem Stand der Technik sind Verfahren zur Erfassung einer Änderung eines Profils eines Reifens bekannt. Dabei ist es aus dem Stand der Technik auch bekannt, Radialbeschleunigungen zu verarbeiten, die mittels Beschleunigungsmessvorrichtungen an oder in einem Reifen erfasst worden sind. Bei den aus dem Stand der Technik bekannten Verfahren könnte die Bestimmung und Erfassung einer Profiltiefenänderung oder einer Profiländerung des Reifens nicht ausreichend effizient sein.

Beispielsweise offenbaren die DE 10 2012 108 348 A1, die DE 10 2015 216 210 A1 und die WO 2018172317 A1 Verfahren zur Bestimmung von Profiltiefen von Fahrzeugreifen.

Der Erfindung liegt daher die Aufgabe zugrunde, ein Verfahren zur Erfassung einer Änderung eines Profils eines Reifens bereitzustellen, mittels dem effizienter die Profiländerung eines Reifens bestimmt werden kann, als es bei aus dem Stand der Technik bekannten Verfahren der Fall ist.

Gelöst wird die gestellte Aufgabe dadurch, dass die Radialbeschleunigungen einem Geschwindigkeitsbereich des Fahrzeugs, an dem der Reifen verwendet wird, zugeordnet werden und in einem weiteren Schritt die Radialbeschleunigungen des Geschwindigkeitsbereichs miteinander verglichen werden, wobei anhand des Vergleichs der Radialbeschleunigungen eine Änderung eines Profils des Reifens bestimmt wird.

Durch den erfindungsgemäßen Umstand, wonach die Radialbeschleunigungen einem Geschwindigkeitsbereich des Fahrzeugs, an dem der Reifen verwendet wird, zugeordnet werden und in einem weiteren Schritt die Radialbeschleunigungen des Geschwindigkeitsbereichs miteinander verglichen werden, wobei anhand des Vergleichs der Radialbeschleunigungen eine Änderung eines Profils des Reifens bestimmt wird, kann eine ausreichend genaue und effiziente Bestimmung der Veränderung eines Profils erfolgen. Eine Verarbeitung und Auswertung sämtlicher, bei unterschiedlichen Geschwindigkeiten des Fahrzeugs gemessenen Radialbeschleunigungen ist nicht erforderlich. Lediglich die Radialbeschleunigungen, die einem bestimmten Geschwindigkeitsbereich zugeordnet werden, werden verarbeitet und ausgewertet. Dadurch, dass lediglich die Radialbeschleunigungen eines Geschwindigkeitsbereichs verarbeitet und ausgewertet werden, wird ein effizienteres Verfahren zur Bestimmung der Änderung eines Profils bereitgestellt, als es aus dem Stand der Technik bekannt ist.

Insbesondere werden mittels der Beschleunigungsmessvorrichtung Radialbeschleunigungen erfasst, wenn sich der Anbringungsbereich der Reifeninnenfläche nicht in einem Bodendurchgang befindet, da die dann erfassten Radialbeschleunigungen mit der Rotationsgeschwindigkeit des Reifens korrelieren. Durch das Abrollen des Reifens auf einem Boden befindet sich stets immer ein Teil des Reifens in unmittelbarem Kontakt mit dem Boden. Der Zustand, zu dem sich ein Teil des Reifens in unmittelbarem Kontakt mit dem Boden befindet, wird als der Bodendurchgang dieses Teils des Reifens bezeichnet.

Insbesondere werden die Radialbeschleunigungen einer Geschwindigkeit des Fahrzeugs, an dem der Reifen verwendet wird, zugeordnet und in einem weiteren Schritt die Radialbeschleunigungen dieser Geschwindigkeit miteinander verglichen, wobei anhand des Vergleichs der Radialbeschleunigungen eine Änderung eines Profils des Reifens bestimmt wird.

Insbesondere werden in einem weiteren Schritt ausschließlich die Radialbeschleunigungen des einen Geschwindigkeitsbereichs oder der einen Geschwindigkeit miteinander verglichen, wobei anhand des Vergleichs der Radialbeschleunigungen eine Änderung eines Profils des Reifens bestimmt wird.

Bei einem veränderten Profil eines Reifens müsste ein Reifen eine höhere Rotationsgeschwindigkeit aufweisen um eine bestimmte Geschwindigkeit des Fahrzeuges zu ermöglichen, als es bei einem noch nicht veränderten Profil der Fall wäre. Hintergrund ist, dass bei einem Profilabrieb des Reifens der Umfang des Reifens kleiner wird. Über die Korrelation der Radialbeschleunigungen zu einer Fahrzeuggeschwindigkeit und Rotationsgeschwindigkeit des Reifens kann daher präzise und ausreichend genau eine Änderung des Profils des Reifens bestimmt werden. Der Profilabrieb stellt die Veränderung des Profils dar.

Darüber hinaus wird der erfindungsgemäße Vorteil erreicht, dass auf bereits vorhandene Sensoren zur Bestimmung der Änderung des Profils zur Durchführung des erfindungsgemäßen Verfahrens zurückgegriffen werden kann. Ein weiterer Eingriff in die Struktur der Fahrzeugelektronik oder der Reifenstruktur an sich, wobei sich der Eingriff durch die Anordnung weiterer Komponenten ergeben würde, ist somit nicht erforderlich.

Somit wird insgesamt ein verbessertes Verfahren bereitgestellt.

Bei dem Reifen handelt es sich beispielsweise um einen PKW-Reifen, einen LKW-Reifen, oder um einen Zweirad-Reifen.

Die Übermittlung der gemessenen Radialbeschleunigungen und der Geschwindigkeit des Fahrzeugs an die Verarbeitungseinheit und von der Verarbeitungseinheit an die Speichervorrichtung kann auf elektrischem oder elektromagnetischem Wege geschehen.

Die Erfindung betrifft ferner ein System zur Bestimmung einer Profiltiefe eines Reifens, aufweisend eine Beschleunigungsmessvorrichtung, eine Speichervorrichtung und insbesondere eine Verarbeitungseinheit. Dabei ist das System zur Durchführung eines erfindungsgemäßen Verfahrens geeignet.

Die Verarbeitungseinheit ist eine Analysevorrichtung und zur Verarbeitung von Datensätzen geeignet. Insbesondere können mittels der Verarbeitungseinheit Mittelwertbildungen oder Bestimmungen von Messintervallen oder Messzeitpunkten vorgenommen werden.

Weitere vorteilhafte Ausgestaltungsformen der vorliegenden Erfindung sind Gegenstand der Unteransprüche.

Gemäß einer vorzugsweisen Ausgestaltungsform des erfindungsgemäßen Verfahrens wird in Abhängigkeit des Vergleichens der Radialbeschleunigungen ein Maß des Abriebs des Profils des Reifens bestimmt.

Durch den erfindungsgemäßen Umstand, wonach in Abhängigkeit des Vergleichens der Radialbeschleunigungen ein Maß eines Abriebs des Profils des Reifens bestimmt wird, kann die Einsatzfähigkeit eines Reifens quantitativ über seine Profileigenschaft bestimmt werden.

Gemäß einer nächsten vorzugsweisen Ausgestaltungsform des vorliegenden Verfahrens werden die Radialbeschleunigungen in regelmäßigen Zeitabständen, beispielsweise in einem zeitlichen Abstand von zwei Sekunden oder sechzehn Sekunden erfasst. Dabei sind die regelmäßigen Zeitabstände insbesondere von der Referenzgeschwindigkeit abhängig. Diese Abhängigkeit von der Referenzgeschwindigkeit bedeutet insbesondere, dass die Zeitabstände in Abhängigkeit von der Referenzgeschwindigkeit ausgewählt worden sind.

Gemäß einer nächsten vorzugsweisen Ausgestaltungsform der vorliegenden Erfindung werden die Radialbeschleunigungen jeweils zu einem Zeitpunkt gemessen, zu dem ein weiterer Bereich der Reifeninnenfläche, der dem Anbringungsbereich der Reifeninnenfläche gegenüber liegt, sich in einer Bodendurchgangsphase befindet.

Durch den erfindungsgemäßen Umstand, wonach die Radialbeschleunigungen jeweils zu einem Zeitpunkt gemessen werden, zu dem ein weiterer Bereich der Reifeninnenfläche, der dem Anbringungsbereich der Reifeninnenfläche gegenüberliegt, sich in einer Bodendurchgangsphase befindet, werden mögliche Einflüsse der Messung durch den Durchlauf des Reifenmaterials durch den Bodendurchgang minimiert und es wird sichergestellt, dass die gemessene Radialbeschleunigung der Radialbeschleunigung des nicht deformierten Reifens möglichst genau entspricht.

Bei der Bodendurchgangsphase eines Bereichs handelt es sich um die zeitliche Phase während einer Rotation des Reifens, während der sich der Bereich im Bodendurchgang befindet.

Gemäß einer nächsten vorzugsweisen Ausgestaltungsform des erfindungsgemäßen Verfahrens werden die Radialbeschleunigungen jeweils zu einem Zeitpunkt gemessen, zu dem die Beschleunigungsmessvorrichtung einem geometrischen Mittelpunkt des weiteren Bereichs genau gegenüber liegt.

Durch den erfindungsgemäßen Umstand, wonach die Radialbeschleunigungen jeweils zu einem Zeitpunkt gemessen werden, zu dem die Beschleunigungsmessvorrichtung einem geometrischen Mittelpunkt des weiteren Bereichs genau gegenüber liegt, wird der weitere Bereich weiter eingeschränkt, so dass die Radialbeschleunigung zu einem genau definierten Zeitpunkt innerhalb des Reifenumlaufs gemessen wird.

Gemäß einer nächsten vorzugsweisen Ausgestaltungsform des erfindungsgemäßen Verfahrens werden die Radialbeschleunigungen jeweils über eine Zeitdauer gemessen, während der sich ein weiterer Bereich der Reifeninnenfläche, der dem Anbringungsbereich der Reifeninnenfläche gegenüber liegt, in einer Bodendurchgangsphase befindet.

Durch den erfindungsgemäßen Umstand, wonach die Radialbeschleunigungen jeweils über eine Zeitdauer gemessen werden, während der sich ein weiterer Bereich der Reifeninnenfläche, der dem Anbringungsbereich der Reifeninnenfläche gegenüber liegt, in einer Bodendurchgangsphase befindet, kann durch eine weitere Betrachtung der gemessenen Werte eine mögliche Schwankung der Messwerte aufgrund von Schwingungen des Reifens minimiert werden.

Gemäß einer nächsten vorzugsweisen Ausgestaltungsform des erfindungsgemäßen Verfahrens wird für den Vergleich der Radialbeschleunigungen nur die maximale Radialbeschleunigung, die während der Zeitdauer erfasst wird, verwendet.

Gemäß einer nächsten vorzugsweisen Ausgestaltungsform des erfindungsgemäßen Verfahrens wird für den Vergleich der Radialbeschleunigungen nur der arithmetische Mittelwert der Beträge der Radialbeschleunigungen, die während der Zeitdauer erfasst werden, verwendet.

Gemäß einer nächsten vorzugsweisen Ausgestaltungsform des erfindungsgemäßen Verfahrens wird für den Vergleich der Radialbeschleunigungen nur der Medianwert der Beträge der Radialbeschleunigungen, die während der Zeitdauer erfasst werden, verwendet.

Gemäß einer nächsten vorzugsweisen Ausgestaltungsform des erfindungsgemäßen Verfahrens werden für den Vergleich der Radialbeschleunigungen die maximale Radialbeschleunigung, die während der Zeitdauer erfasst wird, und der arithmetische Mittelwert der Beträge der Radialbeschleunigungen, die während der Zeitdauer erfasst werden, verwendet.

Gemäß einer nächsten vorzugsweisen Ausgestaltungsform des erfindungsgemäßen Verfahrens werden für den Vergleich der Radialbeschleunigungen die maximale Radialbeschleunigung, die während der Zeitdauer erfasst wird, und der Medianwert der Beträge der Radialbeschleunigungen, die während der Zeitdauer erfasst werden, verwendet.

Gemäß einer nächsten vorzugsweisen Ausgestaltungsform des erfindungsgemäßen Verfahrens werden für den Vergleich der Radialbeschleunigungen der arithmetische Mittelwert der Beträge der Radialbeschleunigungen, die während der Zeitdauer erfasst werden, und der Medianwert der Beträge der Radialbeschleunigungen, die während der Zeitdauer erfasst werden, verwendet.

Gemäß einer nächsten vorzugsweisen Ausgestaltungsform des erfindungsgemäßen Verfahrens werden für den Vergleich der Radialbeschleunigungen die maximale Radialbeschleunigung, die während der Zeitdauer erfasst wird, und der arithmetische Mittelwert der Beträge der Radialbeschleunigungen, die während der Zeitdauer erfasst werden, und der Medianwert der Beträge der Radialbeschleunigungen, die während der Zeitdauer erfasst werden, verwendet.

Gemäß einer nächsten vorzugsweisen Ausgestaltungsform des erfindungsgemäßen Verfahrens werden die Radialbeschleunigungen mittels der Verarbeitungseinheit miteinander verglichen.

Bei der Verarbeitungseinheit handelt es sich insbesondere um eine innerhalb des Fahrzeugs angeordnete Vorrichtung, beispielsweise ein Fahrzeugbordcomputer oder um eine zu dem Fahrzeug externe Vorrichtung.

Weitere Merkmale, Vorteile und Einzelheiten, auf die die Erfindung in ihrem Umfang aber nicht beschränkt ist, werden nun anhand der Zeichnungen näher beschrieben.

Es zeigt:
Figur 1: Eine schematische Darstellung eines erfindungsgemäßen Systems und eines Reifens;
Figur 2: Eine schematische Darstellung eines Reifens an dem ein erfindungsgemäßes Verfahren angewendet werden kann;
Figur 3: Eine schematische Darstellung eines Zusammenhangs zwischen einem abrollenden Reifen und einer Radialbeschleunigung die an dem Reifen bestimmt wird.

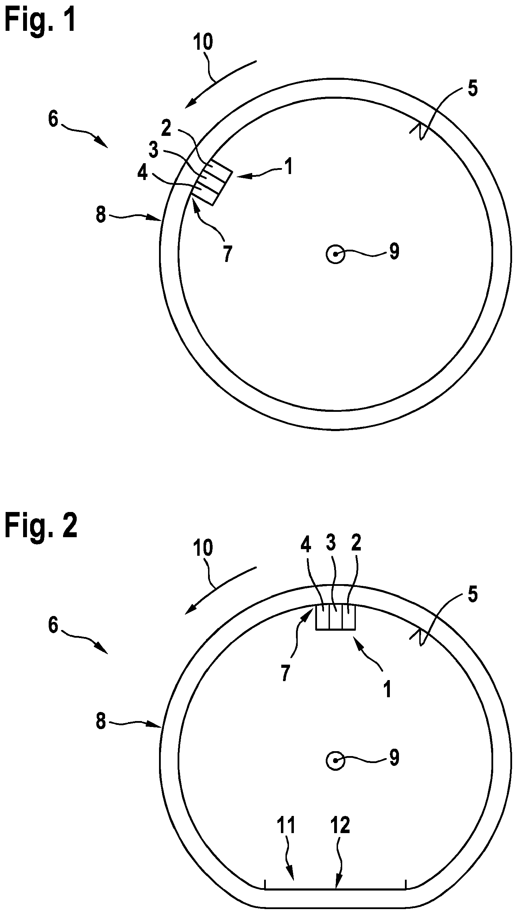

In der Figur 1 ist eine erfindungsgemäßes System 1 zur Bestimmung einer Änderung eines Profils 8 eines Reifens 6 schematisch dargestellt. Der Reifen 6 ist um eine Rotationsachse 9 des Reifens 6 in eine Umlaufrichtung 10 rotierbar.

Das System 1 weist eine Beschleunigungsmessvorrichtung 2, eine Speichervorrichtung 3 und eine Verarbeitungseinheit 4 auf.

Die Beschleunigungsmessvorrichtung 2, die Speichervorrichtung 3 und die Verarbeitungseinheit 4 sind an einem Anbringungsbereich 7 einer Reifeninnenfläche 5 des Reifens 6 angeordnet.

In der Figur 2 ist ein Reifen 6 schematisch dargestellt. An dem Reifen 6 kann ein erfindungsgemäßes Verfahren angewendet werden und der Reifen 6 weist ein System 1 auf. Die Radialbeschleunigungen können jeweils zu einem Zeitpunkt gemessen werden, zu dem ein weiterer Bereich 11 der Reifeninnenfläche 5, der dem Anbringungsbereich 7 der Reifeninnenfläche 7 gegenüberliegt, sich in einer Bodendurchgangsphase befindet.

Die Beschleunigungsmessvorrichtung 2 liegt einem geometrischen Mittelpunkt 12 des weiteren Bereichs 11 genau gegenüber.

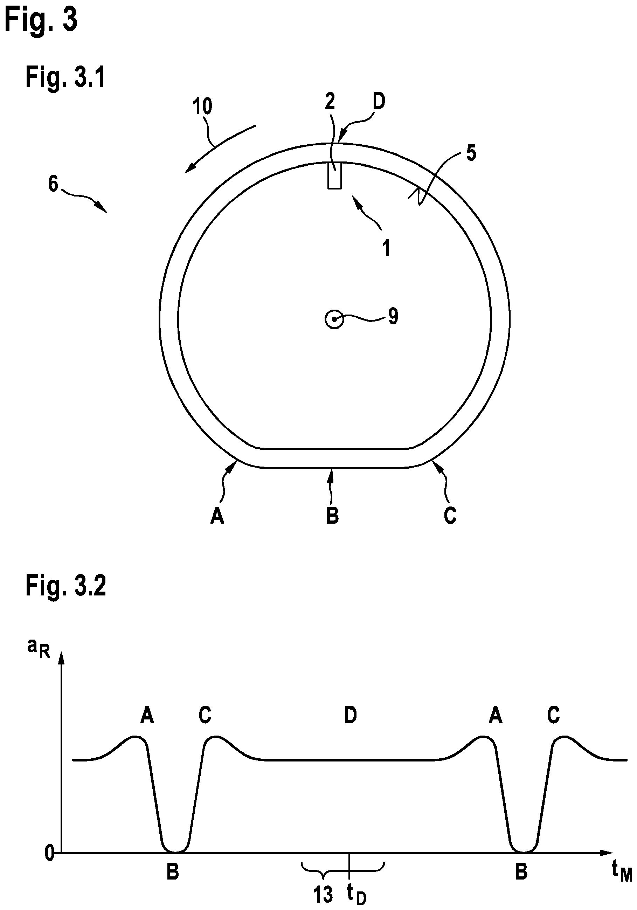

In der Figur 3 ist ein Zusammenhang zwischen einem abrollenden Reifen 6 und einer Radialbeschleunigung, die an dem Reifen 6 bestimmt wird, schematisch dargestellt.

In der Teilfigur 3.1 ist der Reifen 6 und Bereiche A, B, C und D des Reifens 6 dargestellt.

Der Bereich A des Reifens 6 stellt den Bereich des Reifens 6 dar, der gerade in die Bodendurchgangsphase eintritt. Eine Messung des Radialbeschleunigung an dem Bereich A würde zu einem relativ höheren Wert der Radialbeschleunigung führen. Hintergrund der relativ höheren Radialbeschleunigung sind insbesondere mechanische Verformungen des Bereichs A während des Eintritts in die Bodendurchgangsphase.

Der Bereich B befindet sich in der Mitte der Bodendurchgangsphase. Dieser Bereich B erfährt keine Radialbeschleunigung. Der geometrische Mittelpunkt 12 aus Figur 2 liegt innerhalb des Bereichs B.

Der Bereich C des Reifens 6 stellt den Bereich des Reifens 6 dar, der gerade aus der Bodendurchgangsphase heraustritt. Eine Messung des Radialbeschleunigung an dem Bereich C würde zu einem relativ höheren Wert der Radialbeschleunigung führen.

Hintergrund der relativ höheren Radialbeschleunigung sind insbesondere mechanische Verformungen des Bereichs C während des Verlassens der Bodendurchgangsphase.

Der Bereich D des Reifens 6 stellt den Bereich des Reifens 6 dar, der sich nicht in der Bodendurchgangsphase befindet und der dem Bereich B gegenüberliegt. Eine Messung des Radialbeschleunigung an dem Bereich D würde zu einem unverfälschten Wert der Radialbeschleunigung führen.

In der Teilfigur 3.2 ist die gemessene Radialbeschleunigung gegenüber der Messzeit aufgetragen. Auf der Ordinate ist die Radialbeschleunigung a_{R} aufgetragen, auf der Abszisse ist die Messzeit t_{M} aufgetragen. Zum Zeitpunkt t_{D} befindet sich der Bereich D nicht in der Bodendurchgangsphase und er liegt dem Bereich B genau gegenüber. Um den Zeitpunkt t_{D} herum gibt es einen idealen Messzeitbereich 13, während dem eine Radialbeschleunigung a_{R} unverfälscht erfasst werden kann.

In den Bereichen A und C erreicht die Radialbeschleunigung a_{R} lokale Maxima. In den Bereichen B erreicht die Radialbeschleunigung a_{R} lokale Minima.

### Bezugszeichenliste

### (ist Teil der Beschreibung)

- 1: System
- 2: Beschleunigungsmessvorrichtung
- 3: Speichervorrichtung
- 4: Verarbeitungseinheit
- 5: Reifeninnenfläche
- 6: Reifen
- 7: Anbringungsbereich an der Reifeninnenfläche
- 8: Profil
- 9: Rotationsachse
- 10: Umlaufrichtung
- 11: Weiterer Bereich
- 12: Geometrischer Mittelpunkt
- 13: Idealer Messzeitbereich

## Patentansprüche

1. Verfahren zur Erfassung einer Änderung eines Profils (8) eines Reifens (6), aufweisend die folgenden Schritte:
- Bereitstellen eines Reifens (6) eines Fahrzeugs, wobei der Reifen (6) eine Reifeninnenfläche (5) aufweist;
- Bereitstellen einer Beschleunigungsmessvorrichtung (2), wobei die Beschleunigungsmessvorrichtung (2) zur Erfassung einer Beschleunigung vorgesehen ist;
- Anordnen der Beschleunigungsmessvorrichtung (2) an einem Anbringungsbereich (7) der Reifeninnenfläche (5) des Reifens (6);
- Erfassen von Radialbeschleunigungen der Beschleunigungsmessvorrichtung (2) mittels der Beschleunigungsmessvorrichtung (2) zu voneinander verschiedenen Zeitpunkten;
- Erfassen einer Geschwindigkeit des Fahrzeugs;
- Bereitstellen einer Verarbeitungseinheit (4);
- Übermittlung der gemessenen Radialbeschleunigungen und der Geschwindigkeit des Fahrzeugs an die Verarbeitungseinheit (4);
- Bereitstellen einer Speichervorrichtung (3);
- Speicherung und Weiterverarbeitung der Radialbeschleunigungen und der dazu gehörenden Geschwindigkeiten in der Speichervorrichtung (3), wobei die Radialbeschleunigungen einem Geschwindigkeitsbereich des Fahrzeugs, an dem der Reifen (6) verwendet wird, zugeordnet werden und in einem weiteren Schritt die Radialbeschleunigungen des Geschwindigkeitsbereichs miteinander verglichen werden, wobei anhand des Vergleichs der Radialbeschleunigungen eine Änderung eines Profils (8) des Reifens (6) bestimmt wird, **dadurch gekennzeichnet, dass** die Radialbeschleunigungen jeweils zu einem Zeitpunkt gemessen werden, zu dem ein weiterer Bereich (11) der Reifeninnenfläche (5), der dem Anbringungsbereich (7) der Reifeninnenfläche (5) gegenüberliegt, sich in einer Bodendurchgangsphase befindet.

2. Verfahren nach Anspruch 1, **dadurch gekennzeichnet, dass** in Abhängigkeit des Vergleichens der Radialbeschleunigungen ein Maß eines Abriebs des Profils (8) des Reifens (6) bestimmt wird.

3. Verfahren nach einem der vorhergehenden Ansprüche, **dadurch gekennzeichnet, dass** die Radialbeschleunigungen in regelmäßigen Zeitabständen, beispielsweise in einem zeitlichen Abstand von zwei oder sechzehn Sekunden, erfasst werden, wobei die regelmäßigen Zeitabstände insbesondere von der Referenzgeschwindigkeit abhängig sind.

4. Verfahren nach dem vorhergehenden Anspruch, **dadurch gekennzeichnet, dass** die Radialbeschleunigungen jeweils zu einem Zeitpunkt gemessen werden, zu dem die Beschleunigungsmessvorrichtung (2) einem geometrischen Mittelpunkt (12) des weiteren Bereichs (11) genau gegenüberliegt.

5. Verfahren nach einem der Ansprüche 1 bis 4, **dadurch gekennzeichnet, dass** die Radialbeschleunigungen jeweils über eine Zeitdauer gemessen werden, während der sich ein weiterer Bereich (11) der Reifeninnenfläche (5), der dem Anbringungsbereich (7) der Reifeninnenfläche (5) gegenüberliegt, in einer Bodendurchgangsphase befindet.

6. Verfahren nach dem vorhergehenden Anspruch, **dadurch gekennzeichnet, dass** für den Vergleich der Radialbeschleunigungen nur die maximale Radialbeschleunigung, die während der Zeitdauer erfasst wird, verwendet wird.

7. Verfahren nach Anspruch 5, **dadurch gekennzeichnet, dass** für den Vergleich der Radialbeschleunigungen nur der arithmetische Mittelwert der Beträge der Radialbeschleunigungen, die während der Zeitdauer erfasst werden, verwendet wird.

8. Verfahren nach Anspruch 5, **dadurch gekennzeichnet, dass** für den Vergleich der Radialbeschleunigungen nur der Medianwert der Beträge der Radialbeschleunigungen, die während der Zeitdauer erfasst werden, verwendet wird.

9. Verfahren nach Anspruch 5, **dadurch gekennzeichnet, dass** für den Vergleich der Radialbeschleunigungen die maximale Radialbeschleunigung, die während der Zeitdauer erfasst wird, und der arithmetische Mittelwert der Beträge der Radialbeschleunigungen, die während der Zeitdauer erfasst werden, verwendet werden.

10. Verfahren nach Anspruch 5, **dadurch gekennzeichnet, dass** für den Vergleich der Radialbeschleunigungen die maximale Radialbeschleunigung, die während der Zeitdauer erfasst wird, und der Medianwert der Beträge der Radialbeschleunigungen, die während der Zeitdauer erfasst werden, verwendet werden.

11. Verfahren nach Anspruch 5, **dadurch gekennzeichnet, dass** für den Vergleich der Radialbeschleunigungen der arithmetische Mittelwert der Beträge der Radialbeschleunigungen, die während der Zeitdauer erfasst werden, und der Medianwert der Beträge der Radialbeschleunigungen, die während der Zeitdauer erfasst werden, verwendet werden.

12. Verfahren nach Anspruch 5, **dadurch gekennzeichnet, dass** für den Vergleich der Radialbeschleunigungen die maximale Radialbeschleunigung, die während der Zeitdauer erfasst wird, und der arithmetische Mittelwert der Beträge der Radialbeschleunigungen, die während der Zeitdauer erfasst werden, und der Medianwert der Beträge der Radialbeschleunigungen, die während der Zeitdauer erfasst werden, verwendet werden.

13. Verfahren nach einem der vorhergehenden Ansprüche, **dadurch gekennzeichnet, dass** die Radialbeschleunigungen mittels der Verarbeitungseinheit (4) miteinander verglichen werden.

14. System (1) zur Bestimmung einer Änderung eines Profils (8) eines Reifens (6), aufweisend eine Beschleunigungsmessvorrichtung (2), eine Speichervorrichtung (3), und insbesondere eine Verarbeitungseinheit (4), wobei das System (1) zur Durchführung eines Verfahrens nach einem der vorhergehenden Ansprüche geeignet ist.

15. System nach Anspruch 14, in dem der Reifen zusätzlich mindestens eine Vorrichtung zur Messung des Reifendrucks beinhaltet.

## Claims

1. Method for detecting a change in a tread (8) of a tyre (6), comprising the following steps:
- providing a tyre (6) of a vehicle, wherein the tyre (6) has an inner tyre surface (5);
- providing an acceleration measuring device (2), wherein the acceleration measuring device (2) is intended for detecting an acceleration;
- arranging the acceleration measuring device (2) on an attachment area (7) of the inner tyre surface (5) of the tyre (6);
- detecting radial accelerations of the acceleration measuring device (2) by means of the acceleration measuring device (2) at different points in time;
- detecting a speed of the vehicle;
- providing a processing unit (4);
- transmitting the measured radial accelerations and the speed of the vehicle to the processing unit (4);
- providing a memory device (3);
- storing and further processing the radial accelerations and the speeds associated with them in the memory device (3), wherein the radial accelerations are assigned to a speed range of the vehicle at which the tyre (6) is used and, in a further step, the radial accelerations of the speed range are compared with one another, wherein a change in a tread (8) of the tyre (6) is determined on the basis of the comparison of the radial accelerations,
**characterized in that**
the radial accelerations are respectively measured at a point in time at which a further area (11) of the inner tyre surface (5), which is opposite the attachment area (7) of the inner tyre surface (5), is in a ground passing phase.

2. Method according to Claim 1, **characterized in that** a measure of an abrasion of the tread (8) of the tyre (6) is determined in dependence on the comparison of the radial accelerations.

3. Method according to one of the preceding claims, **characterized in that** the radial accelerations are detected at regular time intervals, for example at a time interval of two or sixteen seconds, wherein the regular time intervals are in particular dependent on the reference speed.

4. Method according to the preceding claim, **characterized in that** the radial accelerations are respectively measured at a point in time at which the acceleration measuring device (2) is exactly opposite a geometric centre (12) of the further area (11).

5. Method according to one of Claims 1 to 4, **characterized in that** the radial accelerations are respectively measured over a time period during which a further area (11) of the inner tyre surface (5), which is opposite the attachment area (7) of the inner tyre surface (5), is in a ground passing phase.

6. Method according to the preceding claim, **characterized in that** only the maximum radial acceleration that is detected during the time period is used for the comparison of the radial accelerations.

7. Method according to Claim 5, **characterized in that** only the arithmetic mean value of the absolute amounts of the radial accelerations that are detected during the time period is used for the comparison of the radial accelerations.

8. Method according to Claim 5, **characterized in that** only the median value of the absolute amounts of the radial accelerations that are detected during the time period is used for the comparison of the radial accelerations.

9. Method according to Claim 5, **characterized in that** the maximum radial acceleration that is detected during the time period and the arithmetic mean value of the absolute amounts of the radial accelerations that are detected during the time period are used for the comparison of the radial accelerations.

10. Method according to Claim 5, **characterized in that** the maximum radial acceleration that is detected during the time period and the median value of the absolute amounts of the radial accelerations that are detected during the time period are used for the comparison of the radial accelerations.

11. Method according to Claim 5, **characterized in that** the arithmetic mean value of the absolute amounts of the radial accelerations that are detected during the time period and the median value of the absolute amounts of the radial accelerations that are detected during the time period are used for the comparison of the radial accelerations.

12. Method according to Claim 5, **characterized in that** the maximum radial acceleration that is detected during the time period and the arithmetic mean value of the absolute amounts of the radial accelerations that are detected during the time period and the median value of the absolute amounts of the radial accelerations that are detected during the time period are used for the comparison of the radial accelerations.

13. Method according to one of the preceding claims, **characterized in that** the radial accelerations are compared with one another by means of the processing unit (4).

14. System (1) for determining a change in a tread (8) of a tyre (6), comprising an acceleration measuring device (2), a memory device (3), and in particular a processing unit (4), wherein the system (1) is suitable for carrying out a method according to one of the preceding claims.

15. System according to Claim 14, in which the tyre additionally includes at least one device for measuring the tyre pressure.

## Revendications

1. Procédé de détection d'un changement de profil (8) d'un pneumatique (6), ledit procédé comprenant les étapes suivantes :
- fournir un pneumatique (6) d'un véhicule, le pneumatique (6) comportant une surface de pneumatique intérieure (5) ;
- fournir un dispositif de mesure d'accélération (2), le dispositif de mesure d'accélération (2) étant prévu pour détecter une accélération ;
- disposer le dispositif de mesure d'accélération (2) sur une zone de fixation (7) de la surface de pneumatique intérieure (5) du pneumatique (6) ;
- détecter des accélérations radiales du dispositif de mesure d'accélération (2) au moyen du dispositif de mesure d'accélération (2) à différents instants ;
- détecter une vitesse du véhicule ;
- fournir une unité de traitement (4) ;
- transmettre les accélérations radiales mesurées et la vitesse du véhicule à l'unité de traitement (4) ;
- fournir un dispositif de mémorisation (3) ;
- mémoriser et traiter ultérieurement les accélérations radiales et les vitesses associées dans le dispositif de mémorisation (3), les accélérations radiales étant associées à une gamme de vitesses du véhicule dans laquelle le pneumatique (6) est utilisé et, dans une étape supplémentaire, les accélérations radiales de la gamme de vitesses étant comparées entre elles, un changement d'un profil (8) du pneumatique (6) étant déterminé sur la base de la comparaison des accélérations radiales,
**caractérisé en ce que**
les accélérations radiales sont mesurées chacune à un instant auquel une autre zone (11) de la surface de pneumatique intérieure (5), qui est opposée à la zone de fixation (7) de la surface de pneumatique intérieure (5) se trouve dans une phase de passage au sol.

2. Procédé selon la revendication 1, **caractérisé en ce qu'**une mesure d'abrasion du profil (8) du pneumatique (6) est déterminée en fonction de la comparaison des accélérations radiales.

3. Procédé selon l'une des revendications précédentes, **caractérisé en ce que** les accélérations radiales sont détectées à intervalles de temps réguliers, par exemple à un intervalle de temps de deux ou seize secondes, les intervalles de temps réguliers dépendant notamment de la vitesse de référence.

4. Procédé selon la revendication précédente, **caractérisé en ce que** les accélérations radiales sont mesurées chacune à un instant auquel le dispositif de mesure d'accélération (2) est exactement opposé à un centre géométrique (12) de l'autre zone (11).

5. Procédé selon l'une des revendications 1 à 4, **caractérisé en ce que** les accélérations radiales sont mesurées chacune sur une durée pendant laquelle une autre zone (11) de la surface de pneumatique intérieure (5), qui est opposée à la zone de fixation (7) de la surface de pneumatique intérieure (5), est dans une phase de passage au sol.

6. Procédé selon la revendication précédente, **caractérisé en ce que** seule l'accélération radiale maximale, qui est détectée pendant ladite durée, est utilisée pour effectuer la comparaison des accélérations radiales.

7. Procédé selon la revendication 5, **caractérisé en ce que** seule la moyenne arithmétique des valeurs absolues des accélérations radiales, qui sont détectées pendant ladite durée, est utilisée pour effectuer la comparaison des accélérations radiales.

8. Procédé selon la revendication 5, **caractérisé en ce que** seule la valeur médiane des valeurs absolues des accélérations radiales qui sont détectées pendant ladite durée est utilisée pour effectuer la comparaison des accélérations radiales.

9. Procédé selon la revendication 5, **caractérisé en ce que** l'accélération radiale maximale détectée pendant ladite durée et la moyenne arithmétique des valeurs absolues des accélérations radiales détectées pendant ladite durée sont utilisées pour effectuer la comparaison des accélérations radiales.

10. Procédé selon la revendication 5, **caractérisé en ce que** l'accélération radiale maximale détectée pendant ladite durée et la valeur médiane des valeurs absolues des accélérations radiales détectées pendant ladite durée sont utilisées pour effectuer la comparaison des accélérations radiales.

11. Procédé selon la revendication 5, **caractérisé en ce que** la valeur moyenne arithmétique des valeurs absolues des accélérations radiales détectées pendant ladite durée et la valeur médiane des valeurs absolues des accélérations radiales détectées pendant ladite durée sont utilisées pour effectuer la comparaison des accélérations radiales.

12. Procédé selon la revendication 5, **caractérisé en ce que** l'accélération radiale maximale, qui est détectée pendant ladite durée, et la moyenne arithmétique des valeurs absolues des accélérations radiales, qui sont détectées pendant ladite durée, et la valeur médiane des valeurs absolues des accélérations radiales, qui sont détectées pendant ladite durée, sont utilisées pour effectuer la comparaison des accélérations radiales.

13. Procédé selon l'une des revendications précédentes, **caractérisé en ce que** les accélérations radiales sont comparées entre elles au moyen de l'unité de traitement (4).

14. Système (1) de détermination d'un changement de profil (8) d'un pneumatique (6), ledit système comportant un dispositif de mesure d'accélération (2), un dispositif de mémorisation (3), et notamment une unité de traitement (4), le système (1) étant adapté pour mettre en oeuvre un procédé selon l'une des revendications précédentes.

15. Système selon la revendication 14, dans lequel le pneumatique contient en outre au moins un dispositif de mesure de la pression de pneumatique.
